# EUROPEAN PATENT APPLICATION

(11) **EP 4 539 171 A1**
(43) Date of publication of application: **16.04.2025**
(21) Application number: 23819563.0
(22) Date of filing: 09.05.2023
(51) Int. Cl.: H01M 4/90, B01J 23/63, B01J 23/648, B01J 23/652, H01M 4/86, H01M 8/18

(54) **ELECTRODE, BATTERY CELL, AND REDOX FLOW BATTERY**

(30) Priority: 08.06.2022 JP 2022093332
(71) Applicant: SUMITOMO ELECTRIC INDUSTRIES, LTD., Osaka-shi, Osaka 541-0041 (JP); Carlit Co., Ltd., Tokyo 104-0031 (JP)
(72) Inventor: NAKAISHI, Hiroyuki, Osaka-shi, Osaka 541-0041 (JP); MUKOBATA, Shinichirou, Shibukawa-shi, Gunma 377-0004 (JP); KANEMOTO, Kazuyuki, Shibukawa-shi, Gunma 377-0004 (JP)
(74) Representative: Müller-Boré & Partner Patentanwälte PartG mbB
(86) International application number: PCT/JP2023/017410
(87) International publication number: WO 2023/238577

(57) **Abstract**

An electrode for a redox-flow battery, the electrode comprising a base material having a sheet form and a catalyst supported on the base material, wherein the base material is composed of a sintered body formed of a plurality of particles bonded to each other, the plurality of particles include titanium, the catalyst includes a first oxide provided to cover at least some of the plurality of particles, the first oxide is an oxide including ruthenium and at least one type of first element selected from the group consisting of tungsten, molybdenum, cerium, neodymium, and vanadium, and each of a content of iridium and a content of palladium included in the catalyst per 1 m² of an area of the electrode is 1 g or less.

## Description

### TECHNICAL FIELD

The present disclosure relates to an electrode, a battery cell, and a redox-flow battery. The present application claims the benefit of priority to Japanese Patent Application No. 2022-093332 filed on June 8, 2022, the entire contents of which are incorporated herein by reference.

### BACKGROUND ART

PTLs 1 and 2 disclose an electrode for a redox-flow battery. In this electrode, a catalyst is supported on a base material. The catalyst is a metal oxide. The metal oxide which functions as a catalyst includes a metallic element such as ruthenium, iridium, and palladium, for example.

### CITATION LIST

### PATENT LITERATURE

PTL 1: Japanese Patent Laying-Open No. 2017-143002
PTL 2: Japanese Patent Laying-Open No. 2019-164882

### SUMMARY OF INVENTION

An electrode according to the present disclosure is
an electrode for a redox-flow battery, the electrode comprising:
a base material having a sheet form; and
a catalyst supported on the base material, wherein
the base material is composed of a sintered body formed of a plurality of particles bonded to each other, the plurality of particles include titanium,
the catalyst includes a first oxide provided to cover at least some of the plurality of particles,
the first oxide is an oxide including ruthenium and at least one type of first element selected from the group consisting of tungsten, molybdenum, cerium, neodymium, and vanadium, and
each of a content of iridium and a content of palladium included in the catalyst per 1 m² of an area of the electrode is 1 g or less.

A battery cell according to the present disclosure is
a battery cell of a redox-flow battery, the battery cell comprising:
a positive electrode; and
a negative electrode, wherein
at least one of the positive electrode and the negative electrode is the electrode according to the present disclosure.

A redox-flow battery according to the present disclosure comprises the battery cell according to the present disclosure.

### BRIEF DESCRIPTION OF DRAWINGS

Fig. 1 is a scheme view illustrating an electrode according to an embodiment.
Fig. 2 is a schematic cross-sectional close-up view of a part shown in Fig. 1 that is surrounded by the dash-dot line.
Fig. 3 is a cross-sectional close-up view further enlarging Fig. 2.
Fig. 4 is a schematic view illustrating the configuration of a redox-flow battery according to an embodiment.

### DETAILED DESCRIPTION

### [Problem to be Solved by the Present Disclosure]

In a redox-flow battery, when a catalyst is supported on an electrode, oxidation-reduction reaction at the electrode is activated and, thereby, electrolyte-battery reactivity can be improved. Electrodes for a redox-flow battery are demanded to be less expensive. When an electrode comprises iridium oxide or palladium oxide as a catalyst, charging reaction and discharging reaction at the electrode are facilitated. However, use of iridium oxide or palladium oxide as a catalyst in an electrode increases the cost of the electrode. It is necessary to enhance battery reactivity achieved by the catalyst while minimizing the usage of iridium and palladium.

An object of the present disclosure is to provide an electrode that is inexpensive and has high battery reactivity. Another object of the present disclosure is to provide a battery cell and a redox-flow battery having low cell resistivity.

### [Advantageous Effect of the Present Disclosure]

The electrode according to the present disclosure is inexpensive and has high battery reactivity. The battery cell and the redox-flow battery according to the present disclosure have low cell resistivity.

### [Description of Embodiments]

First, aspects of the present disclosure will be described below.
(1) An electrode according to an aspect of the present disclosure is
   an electrode for a redox-flow battery, the electrode comprising:
   a base material having a sheet form; and
   a catalyst supported on the base material, wherein
   the base material is composed of a sintered body formed of a plurality of particles bonded to each other, the plurality of particles include titanium,
   the catalyst includes a first oxide provided to cover at least some of the plurality of particles,
   the first oxide is an oxide including ruthenium and at least one type of first element selected from the group consisting of tungsten, molybdenum, cerium, neodymium, and vanadium, and
   each of a content of iridium and a content of palladium included in the catalyst per 1 m² of an area of the electrode is 1 g or less.

Having the catalyst supported on the base material, the electrode according to the present disclosure can be improved in electrolyte-battery reactivity as compared to when it does not comprise a catalyst. The catalyst includes the first oxide, and, thereby, can have both the function as an oxidation catalyst and the function as a reducing catalyst. When an electrode comprises a catalyst of this type, charging reaction and discharging reaction at the electrode are facilitated, and thereby high battery reactivity is achieved. Therefore, the electrode according to the present disclosure can have reduced cell resistivity.

In the electrode according to the present disclosure, the content of iridium and the content of palladium included in the catalyst are low, or neither iridium nor palladium is contained in the catalyst. Therefore, the electrode according to the present disclosure is inexpensive.

(2) In the electrode according to (1) above,
the first oxide may include at least one type of element selected from the group consisting of tin, antimony, and titanium.

In the configuration according to (2) above, the catalytic function can be enhanced and/or the catalyst can be inhibited from falling off from the base material.

(3) The electrode according to (1) or (2) above may comprise an intermediate layer between the particle and the catalyst.

The intermediate layer includes a second oxide,
the second oxide is an oxide including at least one type of element selected from the group consisting of ruthenium, tin, antimony, titanium, tungsten, and molybdenum, and
a number of metallic element types included in the second oxide is smaller than a number of metallic element types included in the first oxide.

In the electrode comprising the intermediate layer, the catalyst can be inhibited from falling off from the base material, and/or electrical connection between the base material and the catalyst can be good.

(4) In the electrode according to any one of (1) to (3) above,
in the first oxide, a number of moles of ruthenium may be greater than a total number of moles of the first element.

In the configuration according to (4) above, the catalyst can have the function as an oxidation catalyst and the function as a reducing catalyst in a good balance.

(5) In the electrode according to any one of (1) to (4) above,
a porosity of the electrode may be from 40 volume% to 75 volume%.

In the electrode having the porosity of the electrode equal to or more than 40 volume%, flow of electrolyte inside the electrode tends to be facilitated. In the electrode having the porosity of the electrode equal to or less than 75 volume%, the true volume of the electrode not including voids can be increased and sufficient battery reaction can take place.

(6) In the electrode according to any one of (1) to (5) above,
a content of ruthenium included in the catalyst per 1 m² of an area of the electrode may be from 0.1 g to 90.0 g, and
a total content of the first element included in the catalyst per 1 m² of an area of the electrode may be from 0.1 g to 50.0 g.

In the configuration according to (6) above, the battery reactivity-enhancing effect of the catalyst is increased.

(7) In the electrode according to any one of (1) to (6) above,
a tensile strength of the electrode may be from 4.0 MPa to 16.0 MPa.

When the tensile strength of the electrode satisfies the above-mentioned range, the electrode tends not to be deformed excessively or not to be broken. An electrode of this type has high handleability. In addition, the electrode deforms moderately when it is installed in a battery cell, and, thereby, the electrode tends not to be damaged.

(8) In the electrode according to any one of (1) to (7) above,
a flexural elastic modulus of the electrode may be from 0.25 GPa to 3.0 GPa.

When the flexural elastic modulus of the electrode satisfies the above-mentioned range, the electrode tends not to be deformed excessively or not to be broken. An electrode of this type has high handleability. In addition, the electrode deforms moderately when it is installed in a battery cell, and, thereby, the electrode tends not to be damaged.

(9) A battery cell according to an aspect of the present disclosure is
a battery cell of a redox-flow battery, the battery cell comprising:
a positive electrode; and
a negative electrode, wherein
at least one of the positive electrode and the negative electrode is the electrode according to any one of (1) to (8) above.

The battery cell according to the present disclosure has low cell resistivity. A battery cell of this type can enhance charge efficiency and discharge efficiency of the redox-flow battery.

(10) Moreover, a battery cell according to another embodiment of the present disclosure is
a battery cell of a redox-flow battery, the battery cell comprising:
a positive electrode; and
a negative electrode, wherein
one of the positive electrode and the negative electrode is the electrode according to any one of (1) to (8) above, and
the other one of the positive electrode and the negative electrode comprises a base material composed of an assembly of a plurality of carbon fibers.

In the configuration according to (10) above, the battery cell has excellent assembling properties. The electrode which comprises the base material composed of an assembly of carbon fibers has high flexibility as compared to the electrode according to the present disclosure comprising the base material composed of a sintered body. As a result, at the time when the positive electrode and the negative electrode are installed in the battery cell, the other one of the electrodes undergoes compressional deformation and thereby the battery cell can be easily assembled.

(11) A redox-flow battery according to an aspect of the present disclosure comprises
the battery cell according to (9) or (10) above.

The redox-flow battery has low cell resistivity. The redox-flow battery comprises the above-mentioned battery cell, and thereby has high charge efficiency and high discharge efficiency.

### [Detailed Description of Embodiments]

In the following, a description will be given of specific examples of an electrode, a battery cell, and a redox-flow battery according to an embodiment of the present disclosure, with reference to drawings. In the drawings, the same parts or equivalent parts are given the same reference numeral. Hereinafter, a redox-flow battery may also be called "an RF battery".

It is intended that the scope of the present invention is defined by claims, not by the examples given below, and encompasses all modifications and variations equivalent in meaning and scope to the claims.

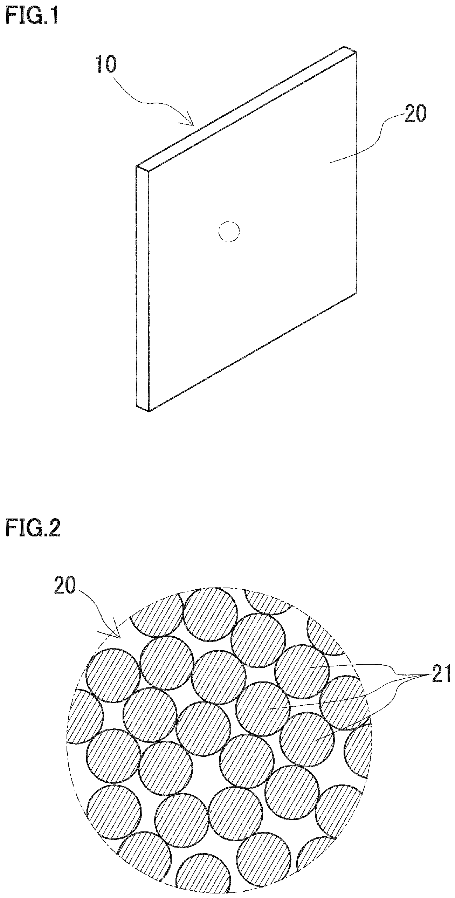

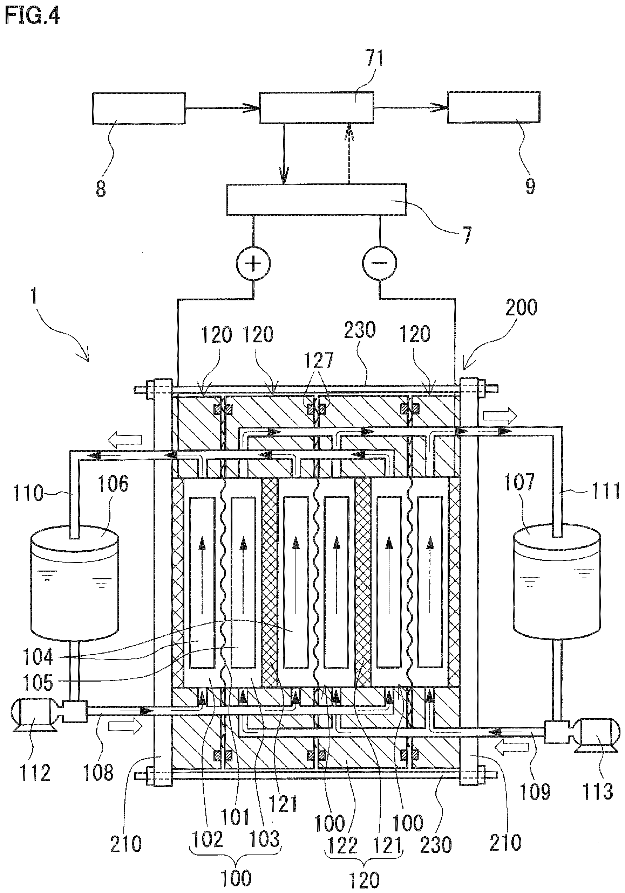

Firstly, with reference to Fig. 4, the basic configuration of an RF battery 1 according to an embodiment will be described. Then, with reference to Fig. 1 to Fig. 3, an electrode 10 according to an embodiment will be described in detail.

### <RF battery>

RF battery 1 is a rechargeable battery where charging and discharging take place through oxidation-reduction reaction of ions in an electrolyte that is circulated within a battery cell 100. RF battery 1 has a positive electrolyte and a negative electrolyte, each of which is an electrolyte that contains, as an active material, ions the valence of which changes along with oxidation and reduction. The electrolyte is a vanadium-based electrolyte or a titanium-manganese-based electrolyte, for example. In the case of a vanadium-based electrolyte, both the positive electrolyte and the negative electrolyte contain vanadium (V) ions. In the case of a titanium-manganese-based electrolyte, the positive electrolyte contains manganese (Mn) ions and the negative electrolyte contains titanium (Ti) ions.

Typically, RF battery 1 is connected to an electric power generating member 8 and a load 9 via an AC/DC converter 7 and a transformer facility 71. RF battery 1 can be charged with electric power that is generated in electric power generating member 8 and can discharge the electric power thus charged to load 9. Electric power generating member 8 is an electric power generation facility or otherwise an ordinary power plant that uses natural energy to perform photovoltaic power generation, wind power generation, and/or the like. RF battery 1 is used for load leveling, instantaneous voltage drop compensation, emergency power source, and output smoothing in natural energy power generation, for example.

RF battery 1 comprises battery cell 100, tanks 106, 107 for storing the electrolyte, and circulation channels for circulating the electrolyte between tank 106 or 107 and battery cell 100. In tank 106, the positive electrolyte is stored. In tank 107, the negative electrolyte is stored. As the configuration of RF battery 1, a known configuration can be used as appropriate.

### <Battery Cell>

Battery cell 100 comprises a positive electrode 104, a negative electrode 105, and a membrane 101. Membrane 101 is positioned between positive electrode 104 and negative electrode 105. Battery cell 100 is separated by membrane 101 into a positive electrode cell 102 and a negative electrode cell 103. Positive electrode 104 is positioned in positive electrode cell 102. Negative electrode 105 is positioned in negative electrode cell 103. To positive electrode cell 102, the positive electrolyte is supplied. To negative electrode cell 103, the negative electrolyte is supplied. Each of positive electrode 104 and negative electrode 105 is a reaction field where a battery reaction of ions included in the electrolyte thus supplied takes place. Each of positive electrode 104 and negative electrode 105 is a sheet-form porous body, for example.

In the present example, pipes 108, 110 that connect battery cell 100 to tank 106 constitute a positive electrolyte circulation channel. Pipe 108 is equipped with a pump 112. By the action of pump 112, the positive electrolyte is supplied from tank 106 through pipe 108 to positive electrode cell 102. After flowing through positive electrode cell 102 and discharged from positive electrode cell 102, the positive electrolyte flows through pipe 110 back to tank 106. In addition, in the present example, pipes 109, 111 that connect battery cell 100 to tank 107 constitute a negative electrolyte circulation channel. Pipe 109 is equipped with a pump 113. By the action of pump 113, the negative electrolyte is supplied from tank 107 through pipe 109 to negative electrode cell 103. After flowing through negative electrode cell 103 and discharged from negative electrode cell 103, the negative electrolyte flows through pipe 111 back to tank 107.

RF battery 1 may have a configuration that comprises a single battery cell 100, or may have a configuration that comprises a plurality of battery cells 100. As illustrated in Fig. 4, RF battery 1 according to the present example comprises a cell stack 200 formed of a plurality of battery cells 100 stacked on top of one another.
Cell stack 200 is formed by stacking a cell frame 120, positive electrode 104, membrane 101, and negative electrode 105 in this order and repeating this sequence. At both ends of cell stack 200, end plates 210 are provided. Fastening members 230 press the end plates 210 against each other to form the cell stack 200 as a one-piece member. As the configuration of cell stack 200, a known configuration can be used as appropriate.

Cell frame 120 has a bipolar plate 121 and frame members 122. Bipolar plate 121 is positioned between positive electrode 104 and negative electrode 105. Frame members 122 surround bipolar plate 121. On the internal side of frame members 122, hollow portions are formed, defined by bipolar plate 121 and frame members 122. The hollow portions are formed on both sides of bipolar plate 121, respectively. In the hollow portions, positive electrode 104 and negative electrode 105 are placed, respectively, sandwiching the bipolar plate 121.

As illustrated in Fig. 4, between bipolar plates 121 of cell frames 120 that are located adjacent to each other, positive electrode 104 and negative electrode 105 are placed in a manner to sandwich the membrane 101, and, thereby, a single battery cell 100 is formed. Between frame members 122 of cell frames 120, a ring-shaped sealing member 127 is placed, for example. The number of battery cells 100 stacked in cell stack 200 can be selected as appropriate.

Frame member 122 has a liquid supply manifold for supplying the electrolyte, and a liquid discharge manifold for discharging the electrolyte (not illustrated). The manifolds are provided to penetrate through frame members 122 to constitute channels for the electrolytes in the stacked cell frames 120. The channels are connected to pipes 108, 109, 110, 111, respectively.

### <Electrode>

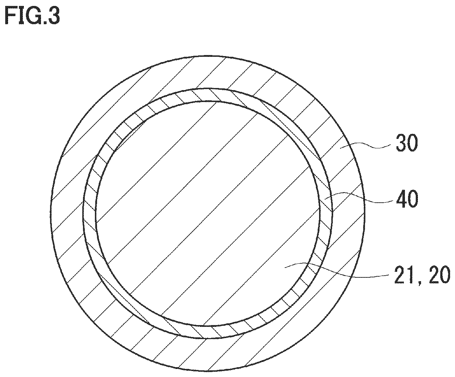

As illustrated in Fig. 1, electrode 10 for an RF battery according to an embodiment comprises a base material 20. Base material 20 is composed of a sintered body. As illustrated in Fig. 2, the sintered body is an assembly of a plurality of particles 21. As illustrated in Fig. 3, electrode 10 comprises a catalyst 30 supported on base material 20. Fig. 1 is an overall view of electrode 10. Fig. 2 is a schematic cross-sectional close-up view of a part shown in Fig. 1 that is surrounded by the dash-dot line. Fig. 3 is a schematic cross-sectional close-up view further enlarging Fig. 2. Having catalyst 30 supported on base material 20, electrode 10 can have improved battery reactivity. When catalyst 30 has a particular oxide, electrode 10 according to the present embodiment can be inexpensive and can have enhanced battery reactivity at the same time.

### <Thickness>

Electrode 10 is a sheet-form porous body. The thickness of electrode 10 is from 0.1 mm to 5.0 mm, for example. With the thickness of electrode 10 being equal to or more than 0.1 mm, the area of contact with the electrolyte, namely, the reaction area tends to be ensured, allowing a sufficient battery reaction to take place. With the thickness of electrode 10 being equal to or less than 5.0 mm, the battery cell can be made thin. Herein, the thickness refers to the thickness in a natural state where no external force is applied to electrode 10. Further, the thickness of electrode 10 may be from 0.2 mm to 2.5 mm, or from 0.3 mm to 2.0 mm.

### <Porosity>

The porosity of electrode 10 is from 40 volume% to 75 volume%, for example. With the porosity of electrode 10 being equal to or more than 40 volume%, flow of the electrolyte inside electrode 10 is facilitated. With the porosity of electrode 10 being equal to or less than 75 volume%, the true volume of electrode 10 can be increased, allowing current collection to take place at a low electrical resistance. Hence, when the porosity of electrode 10 is equal to or less than 75 volume%, a sufficient battery reaction can take place. In addition, when the porosity of electrode 10 is equal to or less than 75 volume%, mechanical properties of electrode 10 tend to be ensured. Further, the porosity of electrode 10 may be from 50 volume% to 70 volume%, particularly from 55 volume% to 65 volume%. The porosity is a value determined by [1-{W/(ρ×Va)}] and expressed in percentage. ρ is the true density of the material of electrode 10. W is the mass of electrode 10. Va is the apparent volume of electrode 10. The apparent volume includes the volume of voids.

### <Mechanical Properties>

Preferably, electrode 10 is excellent in mechanical properties such as strength and rigidity. Electrode 10 excellent in mechanical properties tends not to be deformed excessively or not to be broken, so it has high handleability. Examples of the mechanical properties include tensile strength, tensile elastic modulus, flexural strength, and flexural elastic modulus.

The tensile strength of electrode 10 is from 4.0 MPa to 16.0 MPa, for example. With the tensile strength of electrode 10 being equal to or more than 4.0 MPa, excellent mechanical properties are obtained. With the tensile strength of electrode 10 being equal to or less than 16.0 MPa, electrode 10 deforms moderately when it is installed in battery cell 100 (see Fig. 4), and, thereby, electrode 10 tends not to be damaged. Further, the tensile strength of electrode 10 may be from 5.0 MPa to 13.0 MPa. The tensile elastic modulus of electrode 10 is from 1.0 GPa to 4.0 GPa, for example. With the tensile elastic modulus of electrode 10 being equal to or more than 1.0 GPa, excellent mechanical properties are obtained. With the tensile elastic modulus of electrode 10 being equal to or less than 4.0 GPa, electrode 10 deforms moderately when it is installed in battery cell 100, and, thereby, electrode 10 tends not to be damaged. Further, the tensile elastic modulus of electrode 10 may be from 1.5 GPa to 3.5 GPa.

The flexural strength of electrode 10 is from 3.0 MPa to 30.0 MPa, for example. With the flexural strength of electrode 10 being equal to or more than 3.0 MPa, excellent mechanical properties are obtained. With the flexural strength of electrode 10 being equal to or less than 30.0 MPa, electrode 10 deforms moderately when it is installed in battery cell 100, and, thereby, electrode 10 tends not to be damaged. Further, the flexural strength of electrode 10 may be from 10.0 MPa to 20.0 MPa. The flexural elastic modulus of electrode 10 is from 0.25 GPa to 3.0 GPa, for example. With the flexural elastic modulus of electrode 10 being equal to or more than 0.25 GPa, excellent mechanical properties are obtained. With the flexural elastic modulus of electrode 10 being equal to or less than 3.0 GPa or less, electrode 10 deforms moderately when it is installed in battery cell 100, and, thereby, electrode 10 tends not to be damaged. Further, the flexural elastic modulus of electrode 10 may be from 1.0 GPa to 2.5 GPa.

### (Base Material)

Base material 20 is a porous body serving as the skeletal structure of electrode 10. Base material 20 has electrical conductivity required for electrode 10. In the present embodiment, base material 20 is composed of a titanium (Ti) sintered body. As illustrated in Fig. 2, the Ti sintered body constituting the base material 20 is formed of a plurality of particles 21 bonded to each other, and the plurality of particles 21 include Ti. The sintered body has a three-dimensional network-like skeletal structure that is formed of a plurality of particles 21 bonded to each other. Between the particles 21, there are voids. Particles 21 including Ti are made of pure Ti or Ti alloy. The pure Ti includes at least 99 mass% Ti, with the remainder being made up of inevitable impurities. The Ti alloy may be α-type Ti alloy, (α+β)-type Ti alloy, β-type Ti alloy, corrosion-resistant Ti alloy, and/or the like.

### <Thickness>

Base material 20 is in sheet form. The thickness of base material 20 is substantially the same as the thickness of electrode 10 described above.

### <Porosity>

The porosity of base material 20 is substantially the same as the porosity of electrode 10 described above. Because base material 20 has catalyst 30 supported thereon as illustrated in Fig. 3, the porosity of base material 20 is, strictly speaking, slightly higher than the porosity of electrode 10. However, the amount of catalyst 30 supported on base material 20 is small, so the difference in the porosity attributed to the presence of catalyst 30 is negligible.

The mass of base material 20 per 1 m² of the area of electrode 10 is from 300 g to 3000 g, for example. Herein, the area of electrode 10 refers to the area of electrode 10 when viewed in a plane, namely, the projected area of electrode 10. With the mass of base material 20 per unit area being equal to or more than 300 g/m², the true volume of base material 20 not including voids tends to be greater, and electrical conductivity and mechanical properties tend to be ensured. With the mass of base material 20 per unit area being equal to or less than 3000 g/m², voids tend not to be excessively small, and flow of the electrolyte tends to be ensured. Further, the mass of base material 20 per unit area may be from 400 g/m² to 2000 g/m². The true volume of base material 20 is a value obtained by dividing the mass of base material 20 by the density of the material of base material 20.

### <Average Particle Size of Particles>

The average particle size of particles 21 is from 3 µm to 500 µm, for example. With the average particle size of particles 21 being equal to or more than 3 µm, particles 21 can be easily handled. With the average particle size of particles 21 being equal to or less than 500 µm, the sintered body constituting the base material 20 can have a greater surface area, and, thereby, the reaction area tends to be ensured. Further, the average particle size of particles 21 may be from 4 µm to 300 µm, or from 5 µm to 50 µm. The particle size of particle 21 is [2×(3Vp/4π)^{1/3}], where Vp represents the volume of particle 21. The average of the resulting values is regarded as the average particle size of particles 21.

The average particle size of particles 21 can be determined as follows. A cross section of base material 20 is examined with a scanning electron microscope (SEM). The size of the examination field of view may be determined so that at least fifty particles 21 are contained in the examination field of view. The particle sizes of all the particles 21 contained in the examination field of view are measured. The particle size of each particle 21 is the diameter of a circle that has the same area as the cross-sectional area of the particle 21. The cross-sectional area of a particle 21 can be determined by image processing. The average value of the particle sizes of particles 21 thus measured is regarded as the average particle size of particles 21.

### (Catalyst)

Catalyst 30 is supported on base material 20. As illustrated in Fig. 3, catalyst 30 is formed as a layer on the surface of a particle 21 constituting base material 20, so as to cover the particle 21. Catalyst 30 is simply required to be provided on at least some of the plurality of particles 21 illustrated in Fig. 2. Catalyst 30 may be provided on at least 80% of all the particles 21, or may be provided on all the particles 21. This proportion is the proportion of the number of particles 21 with catalyst 30 to the number of all the particles. In the present embodiment, catalyst 30 is provided on substantially all the particles 21. Catalyst 30 may be in direct contact with the surface of particle 21, or may be provided on the surface of particle 21 via an intermediate layer 40. Catalyst 30 has the function to activate oxidation-reduction reaction at electrode 10 and thereby enhance electrolyte-battery reactivity.

### <Material>

Catalyst 30 has a first oxide. The first oxide is an oxide that includes ruthenium (Ru) and a first element. The first element is at least one selected from the group consisting of tungsten (W), molybdenum (Mo), cerium (Ce), neodymium (Nd), and vanadium (V). The first oxide is, for example, a composite oxide that includes Ru and W, a composite oxide that includes Ru and Mo, a composite oxide that includes Ru and Ce, a composite oxide that includes Ru and Nd, or a composite oxide that includes Ru and V. The first oxide may include a plurality of types of the first element. As a result of intensive research, the inventors of the present invention have found that a composite oxide formed of Ru and the first element has excellent function as catalyst 30. A composite oxide of this type has both the function as an oxidation catalyst and the function as a reducing catalyst. With catalyst 30 having both the function as an oxidation catalyst and the function as a reducing catalyst, charging reaction and discharging reaction at electrode 10 are facilitated. Typically, an oxide that includes Ru and does not include the first element has the function as an oxidation catalyst while having poor function as a reducing catalyst. It is conceivable that when Ru and the first element form a composite together, the function as a reducing catalyst is enhanced.

The first oxide may further include at least one type of element selected from the group consisting of tin (Sn), antimony (Sb), and titanium (Ti). When the first oxide includes at least one type of element selected from Sn, Sb, and Ti, its catalytic function can be enhanced and/or the catalyst can be inhibited from falling off from the base material.

### <Molar Ratio of Ru>

In the first oxide, the number of moles of Ru may be greater than the total number of moles of the first element. In other words, the molar ratio of Ru to the total of the first element may be more than 1. When the molar ratio of Ru to the total of the first element is high, the function as an oxidation catalyst and the function as a reducing catalyst can be obtained in a good balance. The molar ratio of Ru to the total of the first element may be from 5 to 40, for example, and further, it may be from 10 to 25. When the total of all the metallic elements included in the first oxide is regarded as 100 mol%, the content rate of Ru is from 50 mol% to 80 mol%, for example, and further, it is from 55 mol% to 75 mol%. The total content rate of the first element is from 2 mol% to 40 mol%, for example, and further, it is from 2 mol% to 10 mol%.

### <Content of Ru>

The content of Ru included in catalyst 30 per 1 m² of the area of electrode 10 may be from 0.1 g to 90.0 g, and the total content of the first element included in catalyst 30 may be from 0.1 g to 50.0 g. When both the content of Ru and the total content of the first element per unit area satisfy the above-mentioned ranges, the battery reactivity-enhancing effect of catalyst 30 is increased. When both the content of Ru and the total content of the first element satisfy the above-mentioned ranges, an increase of the cost of electrode 10 can be reduced. Further, the content of Ru per unit area may be from 0.1 g/m² to 40.0 g/m², or from 0.1 g/m² to 30.0 g/m². Further, the total content of the first element per unit area may be from 0.1 g/m² to 10.0 g/m².

The mass of catalyst 30 per 1 m² of the area of electrode 10 may be from 1 g to 100 g. With the mass of catalyst 30 per unit area being equal to or more than 1 g/m², the function of catalyst 30 can be sufficiently exhibited. With the mass of catalyst 30 per unit area being equal to or less than 100 g/m², the content of catalyst 30 is reduced and the cost of electrode 10 is reduced. Further, the mass of catalyst 30 per unit area may be from 2 g/m² to 80 g/m², or from 2 g/m² to 60 g/m².

Catalyst 30 may include an oxide other than the above-mentioned first oxide, as well as a metallic element such as gold (Au) and platinum (Pt). The oxide other than the first oxide is, for example, an oxide that includes only one of Sn, Sb, Ti, or the like. The total content of Au and Pt per unit area may be 1 g/m² or less. Both Au and Pt are expensive metals. The lower the content of Au and the content of Pt are, the more reduced the cost is. Each of the content of Au and the content of Pt per unit area may be 0.5 g/m² or less, and further, 0.1 g/m² or less, particularly zero. In other words, neither Au nor Pt may be included in electrode 10. The proportion of the first oxide included in catalyst 30 may be 60 mass% or more, and further, it may be 80 mass% or more. The proportion of the first oxide may be 100 mass%. In other words, catalyst 30 may be solely composed of the first oxide.

### <Content of Ir, Content of Pd>

Each of the content of iridium (Ir) and the content of palladium (Pd) included in catalyst 30 per 1 m² of the area of electrode 10 is 1 g or less. With the content of Ir and the content of Pd per unit area being equal to or less than 1 g/m², the cost of electrode 10 is reduced. Preferably, the total content of Ir and Pd per unit area is 1 g/m² or less. The lower the content of Ir and the content of Pd per unit area are, the more enhanced the cost-reducing effect is. Each of the content of Ir and the content of Pd per unit area may be 0.5 g/m² or less, and further, 0.1 g/m² or less, particularly zero. In other words, neither Ir nor Pd may be included in electrode 10.

### (Intermediate Layer)

As illustrated in Fig. 3, electrode 10 may comprise intermediate layer 40 between particle 21 and catalyst 30 that constitute base material 20. Intermediate layer 40 is provided to cover the particle 21. Intermediate layer 40 is in direct contact with the surface of particle 21. Catalyst 30 is supported on particle 21 via intermediate layer 40. Intermediate layer 40 functions to inhibit catalyst 30 from falling off from particle 21 and to electrically connect particle 21 and catalyst 30.

### <Material>

Intermediate layer 40 has a second oxide. The second oxide is an oxide that includes at least one type of element selected from the group consisting of Ru, Sn, Sb, Ti, W, and Mo. The second oxide that includes the particular metallic element(s) can exhibit the function as intermediate layer 40.

At least one metallic element included in the second oxide may be the same as the metallic element included in the first oxide of catalyst 30. When each of the second oxide and the first oxide includes a metallic element of the same type, these metallic elements of the same type are bonded to each other at the interface between intermediate layer 40 and catalyst 30. As a result, adhesion between intermediate layer 40 and catalyst 30 is enhanced and electrical conductivity between intermediate layer 40 and catalyst 30 is enhanced. In addition, at the interface between particle 21 and intermediate layer 40, oxygen (O) in the second oxide diffuses in Ti of particle 21 to become bonded thereto. As a result, adhesion between particle 21 and intermediate layer 40 is enhanced and electrical conductivity between particle 21 and intermediate layer 40 is enhanced. Hence, when the second oxide and the first oxide include a metallic element of the same type, catalyst 30 tends not to fall off from particle 21 and electrical connection between particle 21 and catalyst 30 is in good condition. The second oxide may include at least one of Ru, Sn, and Ti among the above-mentioned group of elements, and, in particular, it may include Ru. When the second oxide includes Ru, the effect to enhance adhesion between intermediate layer 40 and catalyst 30 is high because the first oxide also includes Ru. In addition, when the second oxide includes Sn which tends to be diffused in Ti of particle 21, the effect to enhance adhesion between particle 21 and intermediate layer 40 is high. When the second oxide includes Ti, Ti in the second oxide becomes bonded to Ti of particle 21, and thereby the effect to enhance adhesion between particle 21 and intermediate layer 40 is high.

Intermediate layer 40 electrically connects particle 21 and catalyst 30 together, so it is required to have high electrical conductivity as compared to catalyst 30. In other words, the electric resistivity of intermediate layer 40 may be lower than the electric resistivity of catalyst 30. For enhanced electrical conductivity of intermediate layer 40, the number of metallic element types included in the second oxide may be smaller than the number of metallic element types included in the first oxide of catalyst 30. The smaller the number of metallic element types included in the second oxide is, the more enhanced the electrical conductivity of the second oxide is. As a result, the electric resistivity of intermediate layer 40 is reduced. Further, when a metallic element included in the second oxide has high electrical conductivity among the above-mentioned group of elements, the electric resistivity of intermediate layer 40 is even more reduced. The lower the electric resistivity of intermediate layer 40 is, the lower the resistance at the connection between particle 21 and catalyst 30 can be. The number of metallic element types included in the second oxide may be 3 or less, and further, it may be 2 or less. The number of metallic element types included in the second oxide may be 1.

Intermediate layer 40 may be thinner than catalyst 30. The mass of intermediate layer 40 per 1 m² of the area of electrode 10 may be from 1 g to 40 g. With the mass of intermediate layer 40 per unit area being equal to or more than 1 g/m², the function of intermediate layer 40 can be sufficiently exhibited. With the mass of intermediate layer 40 per unit area being equal to or less than 40 g/m², the content of intermediate layer 40 is reduced and the cost of electrode 10 is reduced. Further, the mass of intermediate layer 40 per unit area may be from 1.5 g/m² to 35 g/m².

As a result of intensive research, the inventors of the present invention have found that if catalyst 30 is provided on intermediate layer 40, even when the amount of catalyst 30 is small, the battery reactivity-enhancing effect is sufficiently exhibited. Hence, when electrode 10 comprises intermediate layer 40, as compared to when it does not comprise intermediate layer 40, the content of catalyst 30 can be set low. For example, the mass of catalyst 30 per unit area may be 60 g/m² or less, and further, it may be 50 g/m² or less.

Electrode 10 for an RF battery according to the present embodiment can be used as positive electrode 104 of RF battery 1, and can be also used as negative electrode 105. Particularly preferably, electrode 10 is used as positive electrode 104. When electrode 10 is used as negative electrode 105, there is a chance that the Ti sintered body constituting base material 20 can come into contact with the negative electrolyte and can be thereby degraded. Meanwhile, in battery cell 100, when one of positive electrode 104 and negative electrode 105 is electrode 10 according to the present embodiment, the other one may be an electrode that comprises a base material composed of an assembly of a plurality of carbon fibers. The assembly of carbon fibers refers to a plurality of carbon fibers entangled with each other. Typically, the assembly of carbon fibers is carbon felt. An electrode that comprises a base material composed of an assembly of carbon fibers has high flexibility as compared to electrode 10 that comprises base material 20 composed of a Ti sintered body. As a result, at the time when positive electrode 104 and negative electrode 105 are installed in battery cell 100, the electrode that comprises a base material composed of an assembly of carbon fibers undergoes compressional deformation, and, thereby, battery cell 100 can be easily assembled.

### <Method of Producing Electrode>

Electrode 10 described above can be produced in the manner described below. Base material 20, a first solution, and a second solution are prepared. The first solution contains a metallic element for constituting the first oxide which is to form catalyst 30. The second solution contains a metallic element for constituting the second oxide which is to form intermediate layer 40. The second solution is applied to base material 20 and heat treatment is carried out, and thereby intermediate layer 40 is formed on base material 20. After intermediate layer 40 is formed, the first solution is applied to base material 20 and heat treatment is carried out, and thereby catalyst 30 is formed on base material 20. In the following, the method of producing electrode 10 will be described in detail.

### (Preparation of Base Material)

As base material 20, a Ti sintered body is prepared. The size and shape of this sintered body may be selected as appropriate so as to achieve the desired size and shape of electrode 10. Base material 20 can be produced in the manner described below. Ti powder is filled into a die to produce a shaped body. The Ti powder is composed of particles 21 that include Ti. The shaped body is sintered, and thereby base material 20 composed of a sintered body formed of a plurality of particles 21 bonded to each other is produced. The sintering temperature at the time of sintering is from 800°C to 1500°C, for example. The duration to hold the sintering temperature is from 30 minutes to 3 hours, for example. The higher the sintering temperature is, the stronger the sintered body tends to become.

### (Preparation of Solution)

The first solution is a solution that contains raw materials of metallic elements for constituting the first oxide, as well as an organic solvent. The second solution is a solution that contains raw materials of metallic elements for constituting the second oxide, as well as an organic solvent. The raw material of a metallic element is an organic compound, a chloride, a metal alkoxide, an acetate, and/or the like.

The raw material of Ru is, for example, ruthenium(III) chloride hydrate, ruthenium(III) nitrate, ruthenium(IV) oxide hydrate, ruthenium(III) acetate, tris(acetylacetonato)ruthenium(III), and/or hexaammineruthenium(III) chloride.

The raw material of W is, for example, tungsten(VI) ethoxide, tungsten(VI) phenoxide, bis(cyclopentadienyl) tungsten(IV) dichloride, hexacarbonyltungsten, and/or tungsten chloride.

The raw material of Mo is, for example, molybdenum(V) ethoxide, bis(acetylacetonato)molybdenum(IV) oxide, molybdenum(II) acetate, molybdenum(II) acetate dimer, carbonylmolybdenum, molybdenum 2-ethylhexanoate, and/or molybdenum(V) chloride.

The raw material of Ce is, for example, cerium(III) nitrate, cerium(III) chloride, cerium(III) chloride heptahydrate, cerium(IV)-i-propoxide, cerium(IV)-methoxyethoxide, cerium(III)-t-butoxide, and/or cerium(III) 2-ethylhexanoate.

The raw material of Nd is, for example, neodymium(III) isopropoxide, neodymium(III) 2,4-pentanedionate, trifluoroacetylacetonatoneodymium(III), neodymium nitrate hexahydrate, neodymium acetate monohydrate, neodymium chloride monohydrate, neodymium chloride hexahydrate, neodymium fluoride, and/or neodymium(III) 2-ethylhexanoate.

The raw material of V is, for example, acetylacetonatovanadium(III), bis(acetylacetonato)vanadium(IV) oxide, vanadium(V) trichloride oxide, bis(2,4-pentanedionate)vanadium(IV) oxide, vanadium(V) trifluoride oxide, vanadium(III) chloride, vanadium(V) triisopropoxy oxide, vanadium(III) fluoride, vanadium(III) bromide, vanadyl(V) chloride, vanadyl oxalate n-hydrate, bis(cyclopentadienyl) vanadium dichloride, cyclopentadienylvanadium tetracarbonyl, and/or vanadium 2-ethylhexanoate.

The raw material of Sn is, for example, tin tetrachloride, tin(IV) chloride pentahydrate, tin(II) chloride, tin(II) chloride dihydrate, tin(II) bis(2-ethylhexanoate), tin(II) bis(neodecanoate), n-butyltin(IV) trichloride, dibutyltin bis(acetylacetonate), tin(IV) di-n-butyl-di-n-butoxide, tin(IV)-n-butoxide, tin(IV)-t-butoxide, tetramethyltin, tin(II) acetate, and/or tin(IV) acetate.

The raw material of Sb is, for example, antimony tri-i-propoxide, antimony tri-n-propoxide, antimony tri-n-butoxide, antimony tri-i-butoxide, antimony trimethoxide, antimony(III) acetate, antimony trichloride, antimony pentachloride, antimony(III) methoxide, antimony(III) ethoxide, and/or antimony(III) butoxide.

The raw material of Ti is, for example, titanium tetrachloride, titanium(IV) ethoxide, titanium(IV)-n-butoxide, titanium(IV)-t-butoxide, titanium(IV)-i-propoxide, titanium(IV)-n-propoxide, titanium(IV) monochloride i-tripropoxide, titanium(IV) methoxide, (bis-2,4-neodecanoate)-titanium(IV)-n-dibutoxide, titanium(IV) dichloride diethoxide, (bis-2,4-pentanedionate)-titanium(IV)-i-dipropoxide, titanium(IV) 2-ethylhexanoate, titanium(IV) methylphenoxide, and/or titanium(IV)-n-stearylside.

The organic solvent is, for example, trifluoroethanol, pentafluoropropanol, 2,2,3,3,4,4,4-heptafluoro-1-butanol, methanol, ethanol, propyl alcohol, isopropanol, butanol, pentanol, hexanol, 3-methoxy-3-methyl-1-butanol, acetonitrile, propylene carbonate, and/or ethylene carbonate. The organic solvent may be contained at a content from 70 mass% to 95 mass% relative to the entire solution. In addition, the solution may contain a stabilizer, as needed. The stabilizer is acetylacetone, for example. The stabilizer may be contained at a content from 1 mass% to 10 mass% relative to the entire solution. A liquid that contains raw materials of the metallic elements and the organic solvent described above as well as a stabilizer is stirred in an inert gas atmosphere, and thereby the first solution and the second solution are produced. The inert gas is nitrogen and/or argon, for example. The raw materials of the metallic elements are blended so as to achieve a desired ratio between the metallic element concentrations. The stirring duration is approximately from 1 hour to 5 hours, for example.

### (Application and Heat Treatment)

The solution is applied to base material 20 composed of the sintered body, and thereby the solution permeates into base material 20. The solution is applied in such a manner that it covers particles 21 of base material 20. Examples of the method to apply the solution include brushing application, spraying, immersion, flow coating, roll coating, and dipping. Base material 20 having the solution applied thereto is dried. Base material 20 having the solution applied thereto is subjected to heat treatment. The heat treatment includes first heat treatment, second heat treatment, and final heat treatment. The heat treatment is carried out at a temperature from 300°C to 600°C, for example. The heat treatment is carried out for a duration from 10 minutes to 5 hours, for example. The atmosphere for the heat treatment is an atmosphere including oxidizing gas. The oxidizing gas is air, for example. By the heat treatment, the metallic elements included in the solution are oxidized to form an oxide. When the first solution is used, the first oxide is formed. When the second solution is used, the second oxide is formed.

In the production of electrode 10 comprising catalyst 30 and intermediate layer 40, a step to form intermediate layer 40 is carried out and then a step to form catalyst 30 is carried out. In the step to form intermediate layer 40, the second solution is applied to base material 20 and then second heat treatment is carried out. By this step, intermediate layer 40 having the second oxide is formed, where intermediate layer 40 is supported on base material 20. More specifically, until a desired amount of intermediate layer 40 becomes supported on base material 20, a sequence of procedure of [Second solution application] → [Drying] → [Second heat treatment] is repeated. The second heat treatment facilitates the phenomenon of diffusion of the constituent element of the second oxide, from intermediate layer 40 to particles 21. In this procedure, the second heat treatment is carried out at 300°C to 500°C for 10 minutes to 2 hours, for example. As the number of times to repeat this procedure increases, intermediate layer 40 becomes thicker and intermediate layer 40 becomes heavier. The number of times to repeat this procedure is selected as appropriate in such a manner that the mass of intermediate layer 40 per unit area of electrode 10 becomes as desired. In the step to form intermediate layer 40, the number of times to repeat the above-mentioned procedure may be from 1 to 5, for example, and further, it may be 1 to 4.

In the step to form catalyst 30, the first solution is applied to base material 20 on which intermediate layer 40 is formed, and then first heat treatment is carried out. By this step, catalyst 30 having the first oxide is formed on intermediate layer 40, where catalyst 30 is supported on base material 20 via intermediate layer 40. More specifically, until a desired amount of catalyst 30 becomes supported on base material 20, a sequence of procedure of [First solution application] → [Drying] → [First heat treatment] is repeated. The first heat treatment facilitates the phenomenon of diffusion of the constituent elements of the second oxide and the constituent elements of the first oxide between intermediate layer 40 and catalyst 30 and the consequent bonding between metallic elements of the same type. In this procedure, the first heat treatment is carried out at 300°C to 500°C for 10 minutes to 2 hours, for example. As the number of times to repeat this procedure increases, catalyst 30 becomes thicker and catalyst 30 becomes heavier. The number of times to repeat this procedure is selected as appropriate in such a manner that the mass of catalyst 30 per unit area of electrode 10 becomes as desired. In the step to form catalyst 30, the number of times to repeat the above-mentioned procedure may be from 1 to 10, for example, and further, it may be 2 to 8.

In both the step to form intermediate layer 40 and the step to form catalyst 30, as the number of times to repeat the above-mentioned procedure increases, the number of times of heat treatment increases, and due to the heat treatment, mechanical properties of base material 20 may be impaired. From the viewpoint of maintaining mechanical properties of base material 20, the number of times of heat treatment in both steps combined may be 10 or less, for example, and further, 8 or less, particularly 6 or less.

After the step to form catalyst 30, base material 20 on which catalyst 30 and intermediate layer 40 are formed may be subjected to final heat treatment. The final heat treatment is carried out at 400°C to 600°C for 1 hour to 5 hours, for example. The temperature of the final heat treatment may be higher than the temperature of the first heat treatment and the second heat treatment, and the duration may be longer than the duration of the first heat treatment and the second heat treatment. With this, the metallic elements in the first oxide and the metallic elements in the second oxide tend to be sufficiently oxidized.

### [Test Example 1]

An electrode comprising a base material, an intermediate layer, and a catalyst was produced and evaluated.

As the base material, a Ti sintered body was prepared. The Ti sintered body was produced in the manner described below. Ti powder was filled into a die to produce a shaped body. The particle size of the Ti particles of the Ti powder was 45 µm or less. As for the size of the shaped body, the area was 30 mm × 30 mm and the thickness was 0.5 mm. This shaped body was sintered in an argon gas atmosphere to produce a Ti sintered body. The porosity of the base material composed of the Ti sintered body was about 60 volume%. The mass of the base material per unit area was about 1300 g/m². In this example, the sintering temperature was changed to produce three types of sintered bodies, A to C. The sintered body A was produced by sintering at 1000°C for 1 hour. The sintered body B was produced by sintering at 950°C for 2 hours. The sintered body C was produced by sintering at 900°C for 3 hours. Among the samples shown in Table 1 and Table 2, the base material of Sample No. 12 is the sintered body B. The base material of Sample No. 13 is the sintered body C. The base material of the samples except Sample No. 12 and No. 13 is the sintered body A.

Solution was applied to the base material and heat treatment was carried out, and thereby an intermediate layer and a catalyst specified in Table 1 and Table 2 were formed. In the section [Mass (g/m²)] in "Intermediate layer" in Table 1 and Table 2, the mass of the intermediate layer per unit area of the electrode is given. In the section [Mass (g/m²)] in "Catalyst", the mass of the catalyst per unit area of the electrode is given. As the solution, a first solution for forming the catalyst and a second solution for forming the intermediate layer were prepared. The first solution was a mixture of raw materials of the metallic elements for constituting the first oxide specified in Table 1 and Table 2 and an organic solvent. The second solution was a mixture of raw materials of the metallic elements for constituting the second oxide specified in Table 1 and Table 2 and an organic solvent. As the organic solvent, butanol containing 1 mass% acetylacetone added thereto as a stabilizer was used. As raw materials of the metallic elements, dibutyltin bisacetylacetonate, ruthenium(IV) oxide hydrate, antimony(III) ethoxide, tungsten(VI) ethoxide, molybdenum chloride, cerium tri-i-propoxide, neodymium(III) chloride hexahydrate, vanadium(III) chloride, iridium trichloride, and palladium dichloride were prepared. Each solution was produced by stirring the organic solvent containing the stabilizer and the raw materials of metallic elements in a nitrogen atmosphere for 5 hours.

The first solution was produced by selecting raw materials of metallic elements in such a manner that the metallic elements in the first solution were the same as the metallic elements for constituting the first oxide specified in Table 1 and Table 2. The raw materials of the metallic elements were blended in such a manner that the molarity of each metallic element in the first solution was the molar ratio specified in Table 1 and Table 2. In addition, the first solution was blended in such a manner that the total amount of the metallic elements in the first solution was 10 mass%. For example, in the case of the catalyst of Sample No. 1 specified in Table 1, as the raw materials of metallic elements for constituting the first oxide, dibutyltin bisacetylacetonate, ruthenium(IV) oxide hydrate, and tungsten(VI) ethoxide were used. These raw materials of metallic elements were blended in such a manner that the molarity of each metallic element in the first solution was the molar ratio specified in Table 1. In "Catalyst" in Table 1 and Table 2, when [Sn/Ru/W] is found in the section "First oxide" and [30:65:5] is found in the section "Molar ratio", for example, it means that the first oxide contained Sn, Ru, and W and the molar ratio between Sn, Ru, and W was 30:65:5. Here, in the first solution, a trace amount of antimony(III) ethoxide was mixed. Although not specified in Table 1 or Table 2, the first oxide of each sample contained Sb in less than 3 mol%.

The second solution was produced by selecting raw materials of metallic elements in such a manner that the metallic elements in the second solution were the same as the metallic elements for constituting the second oxide specified in Table 1 and Table 2. The second solution was blended in such a manner that the total amount of the metallic elements in the second solution was 5 mass%. For example, in the case of the intermediate layer of Sample No. 1 specified in Table 1, as a raw material of the metallic element for constituting the second oxide, ruthenium(IV) oxide hydrate was used. In "Intermediate layer" in Table 1 and Table 2, when [Ru] is found in the section "Second oxide", for example, it means that the second oxide contained Ru.

Firstly, for forming the intermediate layer, the second solution was applied to the base material by brushing application. After the second solution was applied, the base material was dried. Subsequently, the base material to which the second solution was applied was subjected to second heat treatment. More specifically, until the mass of the intermediate layer per unit area became the mass specified in Table 1 and Table 2, [Second solution application] → [Drying] → [Second heat treatment] was repeated. The second heat treatment was carried out at 400°C for 10 minutes.

Then, for forming the catalyst, the first solution was applied by brushing application to the base material on which the intermediate layer was formed. After the first solution was applied, the base material was dried. Subsequently, the base material to which the first solution was applied was subjected to first heat treatment. More specifically, until the mass of the catalyst per unit area became the mass specified in Table 1 and Table 2, [First solution application] → [Drying] → [First heat treatment] was repeated. The first heat treatment was carried out at 400°C for 10 minutes.

Lastly, the base material on which the intermediate layer and the catalyst were formed was subjected to final heat treatment at 500°C for 1 hour. In this manner, electrodes of Sample No. 1 to No. 17 specified in Table 1, and electrodes of Sample No. 101 to No. 118 specified in Table 2 were produced. The electrode of Sample No. 109 did not have an intermediate layer.

### (Composition Analysis)

For each sample thus obtained, a cross section of the electrode was subjected to composition analysis with the use of SEM and EDX. In all the samples except Sample No. 109, the metallic element included in the second oxide constituting the intermediate layer as specified in Table 1 and Table 2 was found. In addition, in all the samples, the metallic elements included in the first oxide constituting the catalyst as specified in Table 1 and Table 2 were found. Further, the crystal structure was analyzed with an X-ray diffraction apparatus (XRD) and the elementary composition was measured with an X-ray micro analyzer (EPMA) to investigate the form of the intermediate layer and the catalyst, and it was found that each of them was an oxide that included a metallic element. The intermediate layer was found to be composed of the second oxide specified in Table 1 and Table 2. The catalyst was found to be composed of the first oxide specified in Table 1 and Table 2.

From the results of the composition analysis of each sample, the contents of Ru and the first element per unit area of the electrode (g/m²) were determined. In addition, the contents of Ir and Pd elements per unit area of the electrode (g/m²) were also determined. Results are given in Table 1 and Table 2. Here, the content of the first element is given as the total content of W, Mo, Ce, Nd, and V.

### (Cell Resistivity)

The electrode of each sample thus produced was used as a positive electrode of an RF battery, and thereby a battery cell (a single cell) was produced. As a negative electrode, carbon felt was used. The area of the positive electrode and that of the negative electrode are 9 cm², respectively. As an electrolyte, an aqueous sulfuric acid solution containing Ti and Mn each dissolved at 1 M was used. This battery cell was subjected to a charge-discharge test to investigate the cell resistivity. As for the test conditions, constant-current charging and discharging were carried out at a current density of 140 mA/cm². In this test, four cycles of charging and discharging were carried out, by switching from charging to discharging when the voltage reached the upper limit, 1.6 V, and switching from discharging to charging when the voltage reached the lower limit, 0.9 V. The cell resistivity was determined in the manner described below. In each cycle from the second cycle to the fourth cycle, the difference between the average voltage during charging and the average voltage during discharging is measured. This difference is regarded as the average voltage difference. [(Average voltage difference)/((Average current)×2)×(Electrode area)] in each cycle is regarded as the cell resistivity (Ωcm²) in that cycle. The average value of cell resistivity in the cycles from the second cycle to the fourth cycle is regarded as the cell resistivity. The average voltage during charging is regarded as the battery voltage at which the charging capacity on a charging curve obtained by the charge-discharge test became 1/2. The average voltage during discharging is regarded as the battery voltage at which the charging capacity on a discharging curve obtained by the charge-discharge test became 1/2. The charging curve shows the relationship between the voltage and the capacity during charging. The discharging curve shows the relationship between the voltage and the capacity during discharging. Each of the charging curve and the discharging curve is a graph having battery capacity (Ah) on the horizontal axis and battery voltage (V) on the vertical axis, tracking the state of charging/discharging taking place at a constant current. The average current is the average value of the current during charging and the current during discharging. In the charge-discharge test, charging and discharging are carried out at a constant-current mode, so the current during charging and the current during discharging are the same. The cell resistivity of each sample is given in Table 1 and Table 2.

### (Mechanical Properties)

Mechanical properties of each sample were evaluated. The mechanical properties of the electrode measured here were tensile strength, tensile elastic modulus, flexural strength, and flexural elastic modulus.

The tensile strength and the tensile elastic modulus were measured with the use of a tensile tester. The test piece was in the shape of a strip, having a length of about 150 mm and a width of about 5 mm. The test piece was produced in the manner described below. A Ti sintered body having an area larger than the test piece and a thickness of 5 mm was produced. By using this Ti sintered body as a base material and by using the forming method described above, an intermediate layer and a catalyst were formed on the base material. The sample electrode thus obtained was made into a test piece of the above-mentioned size. As the tensile tester, Tensilon Model UCT-30T manufactured by ORIENTEC was used. Conditions for the tensile test were given below.
Strain measurement: Crosshead displacement method
Gripping distance: 10 mm
Test speed: 1 mm/min
Test temperature: 23°C±2°C

The tensile elastic modulus was calculated from the maximum gradient value at 0.1% strain intervals. The tensile test was repeated three times, and the resulting values were averaged to obtain the tensile strength and the tensile elastic modulus, respectively. The tensile strength and the tensile elastic modulus of each sample are given in Table 1 and Table 2.

The flexural strength and the flexural elastic modulus were measured by a three-point bending test. The three-point bending test was carried out in conformity with JIS Z 2248:2014. As for the size of the test piece, the length was about 150 mm, the width was about 30 mm, and the thickness was about 0.5 mm. The test piece was produced in the manner described below. A Ti sintered body having an area larger than the test piece and a thickness of 0.5 mm was produced. By using this Ti sintered body as a base material and by using the forming method described above, an intermediate layer and a catalyst were formed on the base material. The sample electrode thus obtained was made into a test piece of the above-mentioned size. In the bending test, a composite material tester Model 5966 manufactured by Instron was used. The tester had a maximum load of 10 kN. Conditions for the bending test were given below.
Test speed: 2 mm/min
Distance between fulcrums: 26.5 mm
Indenter radius: 5 mm
Fulcrum radius: 5 mm
Test temperature: 23°C±2°C

The flexural strength and the flexural elastic modulus of each sample are given in Table 1 and Table 2.

**[Table 1]**

| Sample No. | Intermediate layer | | Catalyst | | | | | | | Flexural strength (MPa) | Flexural elastic modulus (GPa) | Tensile strength (MPa) | Tensile elastic modulus (GPa) | Cell resistivity (Ωcm²) |
|---|---|---|---|---|---|---|---|---|---|---|---|---|---|---|
| | Second oxide | Mass (g/m²) | First oxide | Molar ratio | Mass (g/m²) | **Ru** (g/m²) | First element (g/m²) | **Ir** (g/m²) | Pd (g/m²) | | | | | |
| 1 | Ru | 5 | Sn/Ru/W | 30:65:5 | 100 | 65 | 5 | 0 | 0 | 8 | 2.4 | 6 | 1.6 | 0.5 |
| 2 | Ti | 5 | Sn/Ru/W | 30:65:5 | 100 | 65 | 5 | 0 | 0 | 8 | 2.4 | 6 | 1.6 | 1.2 |
| 3 | W | 5 | Sn/Ru/W | 30:65:5 | 100 | 65 | 5 | 0 | 0 | 8 | 2.4 | 6 | 1.6 | 1.0 |
| 4 | Mo | 5 | Sn/Ru/W | 30:65:5 | 100 | 65 | 5 | 0 | 0 | 8 | 2.4 | 6 | 1.6 | 1.0 |
| 5 | Ru | 5 | Sn/Ru/W | 30:65:5 | 80 | 52 | 4 | 0 | 0 | 10 | 2 | 7 | 1.8 | 0.7 |
| 6 | Ru | 5 | Sn/Ru/W | 30:65:5 | 60 | 39 | 3 | 0 | 0 | 11 | 1.8 | 8 | 2 | 0.6 |
| 7 | Ru | 5 | Sn/Ru/W | 30:65:5 | 50 | 32.5 | 2.5 | 0 | 0 | 12 | 1.7 | 9 | 2.2 | 0.5 |
| 8 | Ru | 5 | Sn/Ru/W | 30:65:5 | 40 | 26 | 2 | 0 | 0 | 14 | 1.5 | 10 | 2.4 | 0.45 |
| 9 | Ru | 5 | Sn/Ru/W | 30:65:5 | 30 | 19.5 | 1.5 | 0 | 0 | 16 | 1.3 | 11 | 2.7 | 0.45 |
| 10 | Ru | 5 | Sn/Ru/W | 30:65:5 | 20 | 13 | 1 | 0 | 0 | 16 | 0.9 | 11 | 2.7 | 0.35 |
| 11 | Ru | 5 | Sn/Ru/W | 30:65:5 | 10 | 6.5 | 0.5 | 0 | 0 | 16 | 0.7 | 11 | 2.7 | 0.4 |
| 12 | Ru | 5 | Sn/Ru/W | 30:65:5 | 30 | 19.5 | 1.5 | 0 | 0 | 5 | 0.6 | 3 | 0.8 | 1.2 |
| 13 | Ru | 5 | Sn/Ru/W | 30:65:5 | 30 | 19.5 | 1.5 | 0 | 0 | 22 | 3.5 | 18 | 4.2 | 0.7 |
| 14 | Ru | 5 | Sn/Ru/Mo | 30:65:5 | 100 | 65 | 5 | 0 | 0 | 8 | 2.4 | 6 | 1.6 | 0.5 |
| 15 | Ru | 2 | Sn/Ru/Ce | 30:65:5 | 50 | 32.5 | 2.5 | 0 | 0 | 12 | 1.7 | 9 | 2.2 | 0.6 |
| 16 | Ru | 2 | Sn/Ru/Nd | 30:65:5 | 50 | 32.5 | 2.5 | 0 | 0 | 12 | 1.7 | 9 | 2.2 | 0.5 |
| 17 | Ru | 2 | Sn/Ru/V | 30:65:5 | 50 | 32.5 | 2.5 | 0 | 0 | 12 | 1.7 | 9 | 2.2 | 0.4 |

**[Table 2]**

| Sample No. | Intermediate layer | | Catalyst | | | | | | | Flexural strength (MPa) | Flexural elastic modulus (GPa) | Tensile strength (MPa) | Tensile elastic modulus (GPa) | Cell resistivity (Ωcm²) |
|---|---|---|---|---|---|---|---|---|---|---|---|---|---|---|
| | Second oxide | Mass (g/m²) | First oxide | Molar ratio | Mass (g/m²) | Ru (g/m²) | First element (g/m²) | Ir (g/m²) | Pd (g/m²) | | | | | |
| 101 | Sn/Ru/Ir/Pd | 20 | Sn/Ru/Ir/Pd | 30:45:15:10 | 100 | 45 | 0 | 15 | 10 | 8 | 2.4 | 6 | 1.6 | 0.7 |
| 102 | Ru/Ir/Pd | 20 | Sn/Ru/Ir/Pd | 30:45:15:10 | 100 | 45 | 0 | 15 | 10 | 8 | 2.4 | 6 | 1.6 | 0.7 |
| 103 | Sn/Ru/Pd | 20 | Sn/Ru/Ir/Pd | 30:45:15:10 | 100 | 45 | 0 | 15 | 10 | 8 | 2.4 | 6 | 1.6 | 0.7 |
| 104 | Sn/Ir/Pd | 20 | Sn/Ru/Ir/Pd | 30:45:15:10 | 100 | 45 | 0 | 15 | 10 | 8 | 2.4 | 6 | 1.6 | 0.9 |
| 105 | Sn/Ru/Ir | 20 | Sn/Ru/Ir/Pd | 30:45:15:10 | 100 | 45 | 0 | 15 | 10 | 8 | 2.4 | 6 | 1.6 | 0.7 |
| 106 | Sn/Ru/Ir/Pd | 15 | Sn/Ru/Ir/Pd | 30:45:15:10 | 100 | 45 | 0 | 15 | 10 | 8 | 2.4 | 6 | 1.6 | 0.7 |
| 107 | Sn/Ru/Ir/Pd | 10 | Sn/Ru/Ir/Pd | 30:45:15:10 | 100 | 45 | 0 | 15 | 10 | 8 | 2.4 | 6 | 1.6 | 0.65 |
| 108 | Sn/Ru/lr/Pd | 5 | Sn/Ru/Ir/Pd | 30:45:15:10 | 100 | 45 | 0 | 15 | 10 | 8 | 2.4 | 6 | 1.6 | 0.6 |
| 109 | - | 0 | Sn/Ru/lr/Pd | 30:45:15:10 | 100 | 45 | 0 | 15 | 10 | 8 | 2.4 | 6 | 1.6 | 0.7 |
| 110 | Ru | 0.5 | Sn/Ru/lr/Pd | 30:45:15:10 | 100 | 45 | 0 | 15 | 10 | 8 | 2.4 | 6 | 1.6 | 0.5 |
| 111 | Ru | 1 | Sn/Ru/Ir/Pd | 30:45:15:10 | 100 | 45 | 0 | 15 | 10 | 8 | 2.4 | 6 | 1.6 | 0.5 |
| 112 | Ru | 2 | Sn/Ru/Ir/Pd | 30:45:15:10 | 100 | 45 | 0 | 15 | 10 | 8 | 2.4 | 6 | 1.6 | 0.5 |
| 113 | Ru | 5 | Sn/Ru/Ir/Pd | 30:45:15:10 | 100 | 45 | 0 | 15 | 10 | 8 | 2.4 | 6 | 1.6 | 0.5 |
| 114 | Ru | 10 | Sn/Ru/Ir/Pd | 30:45:15:10 | 100 | 45 | 0 | 15 | 10 | 8 | 2.4 | 6 | 1.6 | 0.6 |
| 115 | Ru | 20 | Sn/Ru/Ir/Pd | 30:45:15:10 | 100 | 45 | 0 | 15 | 10 | 8 | 2.4 | 6 | 1.6 | 0.6 |
| 116 | Ru | 5 | Sn/Ru/Ir | 30:65:5 | 100 | 65 | 0 | 5 | 0 | 8 | 2.4 | 6 | 1.6 | 0.9 |
| 117 | Ru | 5 | Sn/Ru/Pd | 30:65:5 | 100 | 65 | 0 | 0 | 5 | 8 | 2.4 | 6 | 1.6 | 0.5 |
| 118 | Ru | 5 | Sn/Ru | 30:70 | 100 | 70 | 0 | 0 | 0 | 8 | 2.4 | 6 | 1.6 | 0.9 |

In the electrodes of Sample No. 1 to No. 17 specified in Table 1, the first oxide constituting the catalyst is an oxide including Ru and the first element. In No. 1 to No. 13, the first oxide is a composite oxide formed of Sn, Ru, and W. In No. 14, the first oxide is a composite oxide formed of Sn, Ru, and Mo. In No. 15, the first oxide is a composite oxide formed of Sn, Ru, and Ce. In No. 16, the first oxide is a composite oxide formed of Sn, Ru, and Nd. In No. 17, the first oxide is a composite oxide formed of Sn, Ru, and V. In all of these samples, the first oxide includes neither Ir nor Pd. Further, in the electrodes of Sample No. 1 to No. 17, the second oxide constituting the intermediate layer includes neither Ir nor Pd. Therefore, the electrodes of Sample No. 1 to No. 17 can be produced at low cost.

In the electrodes of Sample No. 101 to No. 118 specified in Table 2, the first oxide constituting the catalyst includes Ru, but it does not include the first element. In No. 101 to No. 117, the first oxide constituting the catalyst is an oxide including Ru and at least one of Ir and Pd. Therefore, the electrodes of Sample No. 101 to No. 117 are expensive. Among these samples, in No. 101 to No. 108, the second oxide constituting the intermediate layer includes at least one of Ir and Pd. Therefore, the electrodes of Sample No. 101 to No. 108 are more expensive. In No. 118, the first oxide is a composite oxide formed of Sn and Ru.

The cell resistivity of Sample No. 1 to No. 17 and the cell resistivity of Sample No. 101 to No. 118 are 1.2 Ωcm² or less. With low cell resistivity, battery reactivity of the electrodes of these samples is somewhat high. A comparison is made between No. 1, No. 14, and No. 101 to No. 117, each of which has a mass of the catalyst per unit area of 100 g/m². The cell resistivity of each of No. 1 and No. 14 is equal to or less than the cell resistivity of each of No. 101 to No. 117. The cell resistivity of each of No. 1 and No. 14 to No. 17, in which the composition of the first oxide constituting the catalyst is different from each other, was about 0.5 Ωcm².

In the electrodes of Sample No. 1 and No. 14 to No. 17, the first oxide constituting the catalyst includes neither Ir nor Pd, while the battery reactivity is equal to or more than that of the electrodes of Sample No. 101 to No. 117. It indicates that the first oxide including Ru and the first element has excellent function as a catalyst.

Moreover, the cell resistivity of each of No. 1 and No. 14 to No. 17 is less than the cell resistivity of No. 118. Accordingly, the battery reactivity of the electrodes of Sample No. 1 and No. 14 to No. 17 is higher than that of the electrode of Sample No. 118. It indicates that the first oxide including Ru and the first element has an enhanced function as a catalyst as a result of Ru and the first element forming a composite together.

From the results of the cell resistivity of No. 5 to No. 11, it is indicated that even when the mass of the catalyst per unit area is 80 g/m² or less, the function as a catalyst can be sufficiently exhibited.

From a comparison between Sample No. 1 to No. 11, it is indicated that the lower the mass of the catalyst per unit area is, the more excellent the mechanical properties of the electrode tend to be. When a small amount of the catalyst is made to be supported on the base material, only a few times of heat treatment are required to be performed in the catalyst-forming step during the production of the electrode. When the mass of the catalyst per unit area in the electrode is low, degradation of mechanical properties of the base material caused by heat treatment is reduced, and thereby excellent mechanical properties tend to be ensured. Further, when the number of times of heat treatment is small, the resulting electrode has high elasticity and excellent handleability, and thereby the yield at the time of installation into a battery cell is expected to be improved.

A comparison is made between Sample No. 9, No. 12, and No. 13 which share the same configuration of the catalyst and the intermediate layer. The cell resistivity of No. 9 is less than the cell resistivity of No. 12 and No. 13. The tensile strength of No. 9 satisfies the range of 4.0 MPa to 16.0 MPa. The tensile elastic modulus of No. 9 satisfies the range of 1.0 GPa to 4.0 GPa. Further, the flexural strength of No. 9 satisfies the range of 3.0 MPa to 30.0 MPa. The flexural elastic modulus of No. 9 satisfies the range of 0.25 GPa to 3.0 GPa. The tensile strength and the tensile elastic modulus of each of No. 12 and No. 13 are outside the above-mentioned ranges. Moreover, the flexural elastic modulus of No. 13 is also outside the above-mentioned range. From these, it is indicated that in an electrode having its mechanical properties falling within a certain range, a rise of cell resistivity tends to be inhibited. There is a tendency that in an electrode having a large amount of catalyst supported on the base material and having undergone many times of heat treatment, at least one of flexural strength and flexural elastic modulus tends to be high but micro-cracks can tend to be formed and the cell resistivity can tend to be high.

### REFERENCE SIGNS LIST

1 redox-flow battery (RF battery), 7 AC/DC converter, 71 transformer facility, 8 electric power generating member, 9 load, 10 electrode, 20 base material, 21 particle, 30 catalyst, 40 intermediate layer, 100 battery cell, 101 membrane, 102 positive electrode cell, 103 negative electrode cell, 104 positive electrode, 105 negative electrode, 106, 107 tank, 108, 109, 110, 111 pipe, 112, 113 pump, 120 cell frame, 121 bipolar plate, 122 frame member, 127 sealing member, 200 cell stack 210 end plate, 230 fastening member.

## Claims

1. An electrode for a redox-flow battery, the electrode comprising:
a base material having a sheet form; and
a catalyst supported on the base material, wherein
the base material is composed of a sintered body formed of a plurality of particles bonded to each other, the plurality of particles include titanium,
the catalyst includes a first oxide provided to cover at least some of the plurality of particles,
the first oxide is an oxide including ruthenium and at least one type of first element selected from the group consisting of tungsten, molybdenum, cerium, neodymium, and vanadium, and
each of a content of iridium and a content of palladium included in the catalyst per 1 m² of an area of the electrode is 1 g or less.

2. The electrode according to claim 1, wherein the first oxide includes at least one type of element selected from the group consisting of tin, antimony, and titanium.

3. The electrode according to claim 1 or 2, comprising an intermediate layer between the particle and the catalyst, wherein
the intermediate layer includes a second oxide,
the second oxide is an oxide including at least one type of element selected from the group consisting of ruthenium, tin, antimony, titanium, tungsten, and molybdenum, and
a number of metallic element types included in the second oxide is smaller than a number of metallic element types included in the first oxide.

4. The electrode according to any one of claims 1 to 3, wherein in the first oxide, a number of moles of ruthenium is greater than a total number of moles of the first element.

5. The electrode according to any one of claims 1 to 4, wherein a porosity of the electrode is from 40 volume% to 75 volume%.

6. The electrode according to any one of claims 1 to 5, wherein
a content of ruthenium included in the catalyst per 1 m² of an area of the electrode is from 0.1 g to 90.0 g, and
a total content of the first element included in the catalyst per 1 m² of an area of the electrode is from 0.1 g to 50.0 g.

7. The electrode according to any one of claims 1 to 6, wherein a tensile strength of the electrode is from 4.0 MPa to 16.0 MPa.

8. The electrode according to any one of claims 1 to 7, wherein a flexural elastic modulus of the electrode is from 0.25 GPa to 3.0 GPa.

9. A battery cell of a redox-flow battery, the battery cell comprising:
a positive electrode; and
a negative electrode, wherein
at least one of the positive electrode and the negative electrode is the electrode according to any one of claims 1 to 8.

10. A battery cell of a redox-flow battery, the battery cell comprising:
a positive electrode; and
a negative electrode, wherein
one of the positive electrode and the negative electrode is the electrode according to any one of claims 1 to 8, and
the other one of the positive electrode and the negative electrode comprises a base material composed of an assembly of a plurality of carbon fibers.

11. A redox-flow battery comprising the battery cell according to claim 9 or 10.
